# EUROPÄISCHE PATENTSCHRIFT

(11) **EP 0 875 772 B1**
(45) Veröffentlichungstag und Bekanntmachung des Hinweises auf die Patenterteilung: **31.05.2006**
(21) Anmeldenummer: 98107829.8
(22) Anmeldetag: 29.04.1998
(51) Int. Cl.: G01S 13/08

(54) **Verfahren und Anordnung zur Entfernungsmessung mit elektromagnetischen Wellen nach dem Impulslaufzeitverfahren**
Method and arrangement for distance measurement with electromagnetic waves using the pulse time of flight principle
Procédé et appareil de mesure de distance par ondes électromagnétiques employant le temps de vol d'impulsions

(30) Priorität: 02.05.1997 US 45463 P
(43) Veröffentlichungstag der Anmeldung: 04.11.1998
(73) Patentinhaber: Endress + Hauser GmbH + Co. KG, 79689 Maulburg (DE)
(72) Erfinder: Perdue, Kenneth L., Franklin, Indiana 46131 (US); Michalski, Bernhard, 79689 Maulburg (DE)
(74) Vertreter: Andres, Angelika Maria

(56) Entgegenhaltungen:
- WO-A-96/07928
- GB-A- 2 238 201
- US-A- 4 008 469

## Beschreibung

Die Erfindung betrifft die Entfernungsmessung mit elektromagnetischen Impulsen nach dem Impulslaufzeitverfahren, bei welchem in periodischen sendezeitpunkten jeweils ein kurzer elektromagnetischer Sendeimpuls ausgesendet wird, aus den in jeder Sendeperiode nach dem Sendezeitpunkt erhaltenen Empfangssignalen der Nutzechoimpuls ermittelt wird, der an dem Objekt reflektiert worden ist, dessen Entfernung gemessen werden soll, und die Laufzeit des Nutzechoimpulses als Maß für die zu messende Entfernung bestimmt wird.

Aus den PCT-Veröffentlichungen WO 96/07928 und WO 96/19737 ist es insbesondere für die Messung sehr kurzer Entfernungen bekannt, die in aufeinanderfolgenden Sendeperioden nach den Sendezeitpunkten erhaltenen Empfangssignale stroboskopisch abzutasten, indem in jeder Sendeperiode in einem durch eine Sägezahnfunktion bestimmten Abtastzeitpunkt ein Abtastwert entnommen wird, wobei die Abtastzeitpunkte gegenüber den Sendezeitpunkten in aufeinanderfolgenden Sendeperioden eine durch den linearen Anstieg der Sägezahnfunktion bestimmte zunehmende Verzögerung aufweisen. Die nacheinander erhaltenen Abtastwerte ergeben ein zeitlich gedehntes Abbild des abgetasteten Empfangssignals. Bei diesen bekannten Verfahren wird die sägezahnfunktion durch ein von einem Sägezahngenerator erzeugtes Sägezahnsignal definiert, so daß sie durch den Aufbau des Sägezahngenerators festgelegt ist. Es besteht daher keine Möglichkeit, sie in Abhängigkeit von dem Meßergebnis, zur Anpassung an unterschiedliche Anwendungsbedingungen oder zur Korrektur von Abweichungen zu ändern. Desgleichen ist es nicht möglich, anstelle einer Sägezahnfunktion eine andere Abtastfunktion anzuwenden.

Ein Ziel der Erfindung ist die Schaffung eines Verfahrens der vorstehend angegebenen Art, mit dem beliebige Abtastfunktionen anwendbar sind und das jede gewünschte Modifikation der angewendeten Abtastfunktion ermöglicht.

Ein weiteres Ziel der Erfindung ist die Schaffung eines Vefahrens dieser Art, das eine höhere Empfindlichkeit, eine verbesserte Auflösung, einen geringeren Leistungsbedarf und eine bessere Unterdrückung von Störeinflüssen ermöglicht.

Ein weiteres Ziel der Erfindung ist die Schaffung einer Anordnung, mit der das erfindungsgemäße verfahren durchgeführt werden kann.

Gemäß einem Aspekt schafft die Erfindung ein Verfahren zur Entfernungsmessung mit elektromagnetischen Wellen nach dem Impulslaufzeitverfahren gemäß Anspruch 1.

Infolge der Erzeugung der Abtastfunktion durch eine Rechenschaltung, beispielsweise durch einen Mikrocomputer, ist es möglich, jede gewünschte Abtastfunktion anzuwenden und dadurch die Abtastung der Empfangssignale auf beliebige Weise zu variieren. Die Abtastung kann auch in Abhängigkeit vom Meßergebnis verändert werden, beispielsweise um die Anzahl der Abtastungen in interessierenden Bereichen zu erhöhen und in anderen Bereichen zu verringern. Weiterhin ist es möglich, die tatsächlich erzielten verzögerungen genau auf vorgeschriebene Sollwerte zu regeln.

Gemäß einem anderen Aspekt schafft die Erfindung ein Verfahren zur Entfernungsmessung mit elektromagnetischen Wellen nach dem Impulslaufzeitverfahren, bei welchem in periodischen Sendezeitpunkten jeweils ein kurzer elektromagnetischer Sendeimpuls ausgesendet wird und die in ausgewählten sendeperioden nach den Sendezeitpunkten erhaltenen Empfangssignale abgetastet werden, indem in jeder dieser Sendeperioden in einem Abtastzeitpunkt, der gegenüber dem Sendezeitpunkt eine durch eine Abtastfunktion bestimmte Verzögerung aufweist, jeweils in einem Abtastzeitintervall ein Abtastwert entnommen wird, wobei die Abtastzeitpunkte gegenüber den Sendezeitpunkten unterschiedliche Verzögerungen aufweisen, und bei welchem die die Verzögerungen bestimmende Abtastfunktion eine Treppenfunktion ist, deren Stufen eine Länge von mehreren Abtastzeitintervallen haben, so daB die Abtastzeitpunkte in mehreren aufeinanderfolgenden Abtastzeitintervallen die gleiche Verzögerung gegenüber den Sendezeitpunkten haben.

Durch dieses Verfahren erfolgt eine wiederholte Abtastung des Empfangssignals an bestimmten Abtastzeitpunkten, die der gleichen Heßentfernung entsprechen. Dies ermöglicht die Integration mehrerer aufeinanderfolgender Abtastwerte, wodurch eine größere Echtzeit-Signalamplitude erzielt wird. Ferner ergibt sich eine höhere Empfindlichkeit, und der Einfluß von Störungen wird verringert.

Eine erfindungsgemäße Anordnung zur Entfernungsmessung mit elektromagnetischen Wellen nach dem Impulslaufzeitverfahren enthält eine Sende-Empfangs-Anordnung zur Aussendung von kurzen elektromagnetischen Sendeimpulsen in periodischen Sendezeitpunkten und zur Lieferung von Empfangssignalen, die die reflektierten Echoimpulse enthalten, einen Sendeimpulsgenerator zur Erzeugung der sendeimpulse, einen Sendetaktgeber, der ein periodisches sendetaktsignal erzeugt, das dem Sendeimpulsgenerator zugeführt wird und die Sendezeitpunkte bestimmt, eine Abtastschaltung, in der die Empfangssignale in aufeinanderfolgenden Sendeperioden unter Steuerung durch Abtastimpulse abgetastet werden, einen Abtastimpulsgenerator, der in allen oder in ausgewählten Sendeperioden jeweils einen Abtastimpuls in einem Abtastzeitpunkt erzeugt, der eine durch eine Abtastfunktion bestimmte Verzögerung gegenüber dem Sendezeitpunkt aufweist, eine Verzögerungssteuerschaltung, die das Sendetaktsignal und ein die Abtastfunktion repräsentierendes Funktionssignal empfängt und zum Abtastimpulsgenerator ein die Abtastzeitpunkte bestimmendes Abtaststeuersignal liefert, und eine Rechenschaltung, die das Funktionssignal auf Grund der in der Rechenschaltung festgelegten Abtastfunktion erzeugt.

Weitere Merkmale und Vorteile der Erfindung ergeben sich aus der folgenden Beschreibung eines Ausführungsbeispiels anhand der Zeichnung. In der Zeichnung zeigen:
- Fig. 1: das Blockschaltbild einer Anordnung zur Durchführung des erfindungsgemäßen Verfahrens,
- Fig. 2.: das Zeitdiagramm einer Abtastfunktion, die bei dem erfindungsgemäßen Verfahren anwendbar ist, und
- Fig. 3: das Zeitdiagramm einer anderen Abtastfunktion, die bei dem erfindungsgemäßen Verfahren anwendbar ist.

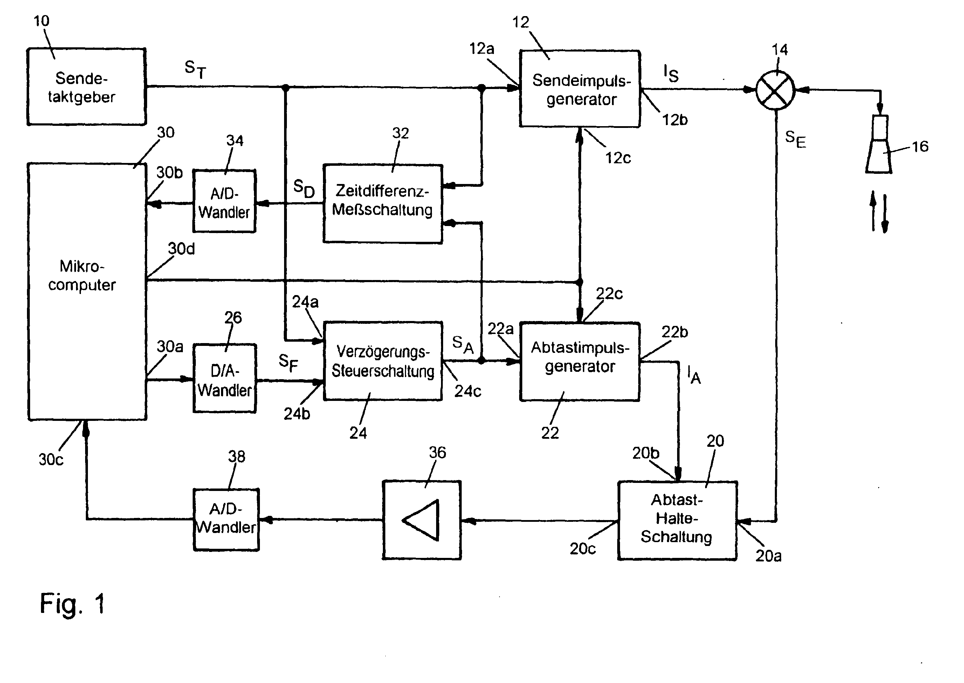

Fig. 1 zeigt schematisch das Blockschaltbild einer nach dem Impulslaufzeitverfahren arbeitenden Entfernungsmeßanordnung. Sie enthält einen Sendetaktgeber 10, der vorzugsweise quarzgesteuert ist und am Ausgang ein Sendetaktsignal S_{T} liefert, das einem Steuereingang 12a eines Sendeimpulsgenerators 12 zugeführt wird. Der Sendeimpulsgenerator 12 erzeugt in den durch das Sendetaktsignal S_{T} bestimmten Zeitabständen jeweils einen sehr kurzen Sendeimpuls I_{S}, der von seinem Ausgang 12b über eine sende-Empfangsweiche 14 einer Antenne 16 zugeführt wird. Die Antenne 16 dient zugleich als Sendeantenne und als Empfangsantenne. Sie sendet in aufeinanderfolgenden Sendeperioden, deren Dauer durch das Sendetaktsignal S_{T} bestimmt ist, die vom Sendeimpulsgenerator 12 gelieferten Sendeimpulse I_{T} in Form kurzer Mikrowellenimpulse aus, und sie empfängt in dem sich an jeden Sendeimpuls anschließenden Abschnitt jeder Sendeperiode Mikrowellensignale, die an der Antenne 16 eintreffen. Zu diesen Mikrowellensignalen gehört insbesondere der Nutzechoimpuls, der an dem Objekt reflektiert worden ist, dessen Abstand von der Meßanordnung gemessen werden soll. Ferner können die empfangenen Mikrowellensignale Störechoimpulse, die an anderen Objekten reflektiert worden sind, sowie weitere Störsignale enthalten. Die Gesamtheit dieser von der Antenne 16 empfangenen Mikrowellensignale bildet das Empfangssignal S_{E}, das über die Sende-Empfangsweiche 14 dem Empfangsteil der Meßanordnung zugeführt wird. Die Entfernungsmessung erfolgt dadurch, daß die Laufzeit der Mikrowellenimpulse von der Antenne 16 bis zu der Reflexionsstelle und wieder zurück zur Antenne ermittelt wird. Diese Laufzeit ist gleich dem Zeitabstand zwischen der Aussendung eines sendeimpulses und dem Empfang des Nutzechoimpulses. Das Produkt aus der gemessenen Laufzeit und der bekannten Ausbreitungsgeschwindigkeit der elektromagnetischen Wellen ist gleich dem doppelten Abstand zwischen der Meßanordnung und der Reflexionsstelle.

Ein bekanntes Anwendungsgebiet für eine Meßanordnung dieser Art ist die Messung des Füllstands in einem Behälter. Diese Messung kann nach dem Radarprinzip dadurch erfolgen, daß die Antenne 16 oberhalb des höchsten vorkommenden Füllstands im Behälter angebracht ist und Mikrowellenimpulse nach unten abstrahlt, die durch den freien Raum zur Füllgutoberfläche laufen, worauf die an der Füllgutoberfläche reflektierten Echoimpulse wieder durch den freien Raum zur Antenne zurückkehren, wie dies bei dem in Fig. 1 dargestellten Ausführungsbeispiel der Fall ist. Aus der veröffentlichten europäischen Patentanmeldung EP 0 162 821 A1 ist es auch bekannt, mit der Antenne das eine Ende eines rohrförmigen Wellenleiters zu verbinden, dessen anderes Ende in das Füllgut eintaucht, so daß die Mikrowellen von der Antenne in den Innenraum des rohrförmigen wellenleiters abgestrahlt werden und von diesem nach Art eines Hohlleiters geführt werden. Die Füllgutoberfläche liegt im Innenraum des rohrförmigen Wellenleiters auf gleicher Höhe wie außerhalb, und die an der Füllgutoberfläche reflektierten Echowellen laufen durch den rohrförmigen Wellenleiter zur Antenne zurück.

In der deutschen Patentschrift DE 44 04 745 C2 ist eine weitere Füllstandsmeßvorrichtung beschrieben, die keine Antenne zur Abstrahlung und zum Empfang von Mikrowellen aufweist, sondern bei der die Mikrowellen entlang einer Wellenleitung zur Füllgutoberfläche geleitet werden. Eine solche Wellenleitung ist unter der Bezeichnung "Goubau-Leitung" bekannt. Die Goubau-Leitung kann zwei parallele Leiter nach Art einer Doppelleitung oder einer Koaxialleitung aufweisen, oder sie kann durch einen Einzelleiter gebildet sein. In jedem Fall laufen die Mikrowellen auf der Goubau-Leitung zur Füllgutoberfläche, wo sie infolge des dort bestehenden Impedanzsprungs wenigstens teilweise reflektiert werden, und der reflektierte Teil der Mikrowellen läuft auf der Goubau-Leitung zur Einkoppelstelle zurück. Im Gegensatz zu der Messung nach dem Radarprinzip, bei der die Mikrowellen-Sendeimpulse auf einer festen Trägerfrequenz ausgesendet werden, besteht bei Anwendung der Goubau-Leitung jeder Sendeimpuls vorzugsweise aus einem spitzen Nadelimpuls, der ein breites Frequenzband einnimmt.

Sowohl bei der Füllstandermessung nach dem Radarprinzip als auch bei der Anwendung der Goubau-Leitung ergibt sich aus der Laufzeit der Mikrowellenimpulse, also aus dem Zeitabstand zwischen der Aussendung eines Sendeimpulses und dem Empfang des an der Füllgutoberfläche reflektierten Echoimpulses, der Abstand zwischen der Einkoppelstelle der Antenne bzw. der Goubau-Leitung und der Füllgutoberfläche; der zu messende Füllstand kann aus diesem Abstand und der bekannten Einbauhöhe der Einkoppelstelle leicht berechnet werden.

Die in Fig. 1 dargestellte Meßanordnung kann kann sowohl für die Entfernungsmessung nach dem Radarprinzip als auch für die Abstandsmessung mit Goubau-Leitung angewendet werden, da es keine Rolle spielt, auf welche Weise die Mikrowellenimpulse übertragen werden.

Als Beispiel wird in der folgenden Beschreibung angenommen, daß das Sendetaktsignal S_{T} eine Frequenz von 2 MHz hat, so daß die durch das Sendetaktsignal bestimmte Sendeperiode eine Dauer von 0,5 µs hat. Die vom Sendeimpulsgenerator 12 erzeugten Sendeimpulse I_{S} sind bei Anwendung der Goubau-Leitung kurze Nadelimpulse, die beispielsweise eine Dauer von 100 ps haben und ein Frequenzband von etwa 1 MHz bis 4 GHz einnehmen.

Bei kleinen Entfernungen, wie sie beispielsweise bei der Füllstandsmessung zu erfassen sind, sind die zu messenden Zeiten sehr kurz. Beispielsweise entspricht einer Meßentfernung von 15 m eine Impulslaufzeit von 100 ns. Da eine Messung so kleiner Zeiten mit der erforderlichen Genauigkeit sehr aufwendig ist, wird bei der dargestellten Meßanordnung eine Zeitdehnung durch eine stroboskopische Abtastung vorgenommen, die auch unter der Bezeichnung TDR ("Time Domain Reflectometry") bekannt ist. Diese stroboskopische Abtastung erfolgt dadurch, daß in ausgewählten Sendeperioden jeweils ein Abtastwert aus dem Empfangssignal entnommen wird, wobei die Abtastzeitpunkte gegenüber dem Beginn der Sendeperiode zunehmend verschoben werden. Die Abtastung erfolgt über den Zeitbereich der Sendeperioden, der dem zu erfassenden Entfernungsbereich von der kleinsten vorkommenden Entfernung bis zu der größten vorkommenden Entfernung entspricht. Unter der Voraussetzung, daß sich das Empfangssignal während einer vollständigen Abtastung nicht wesentlich ändert, ergeben die zusammengesetzten Abtastwerte ein Abbild des Empfangssignals, jedoch in einem Zeitmaßstab, der gegenüber dem Zeitmaßstab des Echtzeit-Empfangssignals um einen Faktor gedehnt ist. Wenn in unmittelbar aufeinanderfolgenden Sendeperioden jeweils eine Abtastung erfolgt, ist der Faktor der Zeitdehnung gleich der Anzahl der Abtastungen für die vollständige Erfassung einer Periode des Empfangssignals, und das Abtastzeitintervall, d. h. der Zeitabstand zwischen zwei aufeinanderfolgenden Abtastungen, ist - abgesehen von der geringfügigen Änderung der Zeitverschiebung gegenüber dem sendezeitpunkt - gleich der Dauer einer Sendeperiode. Eine noch größere Zeitdehnung wird erreicht, wenn ein Abtastwert nicht in jeder Sendeperiode, sondern nur in jeder n-ten Sendeperiode entnommen wird; in diesem Fall ist das Abtastzeitintervall gleich der Dauer von n aufeinanderfolgenden Sendeperioden, und der Faktor der Zeitdehnung ist gleich dem Produkt aus der Anzahl der Abtastungen für die vollständige Erfassung einer Periode des Empfangssignals und der Anzahl n der Sendeperioden in jedem Abtastzeitintervall.

Bei der dargestellten Meßanordnung erfolgt die stroboskopische Abtastung durch eine Abtast-Halte-Schaltung 20 (auch als "Sample & Hold" bekannt), die das Empfangssignal S_{E} an einem Signaleingang 20a empfängt. Ein Steuereingang 20b der Abtast-Halte-Schaltung 20 ist mit dem Ausgang eines Abtastimpulsgenerators 22 verbunden. Für jeden vom Abtastimpulsgenerator 22 zum Steuereingang 20b geschickten Abtastimpuls I_{A} tastet die Abtast-Halte-Schaltung 20 den Augenblickswert des Empfangssignals S_{E} ab; der erhaltene Abtastwert wird festgehalten und steht bis zur nächsten Abtastung am Ausgang 20c der Abtast-Halte-Schaltung 20 zur Verfügung.

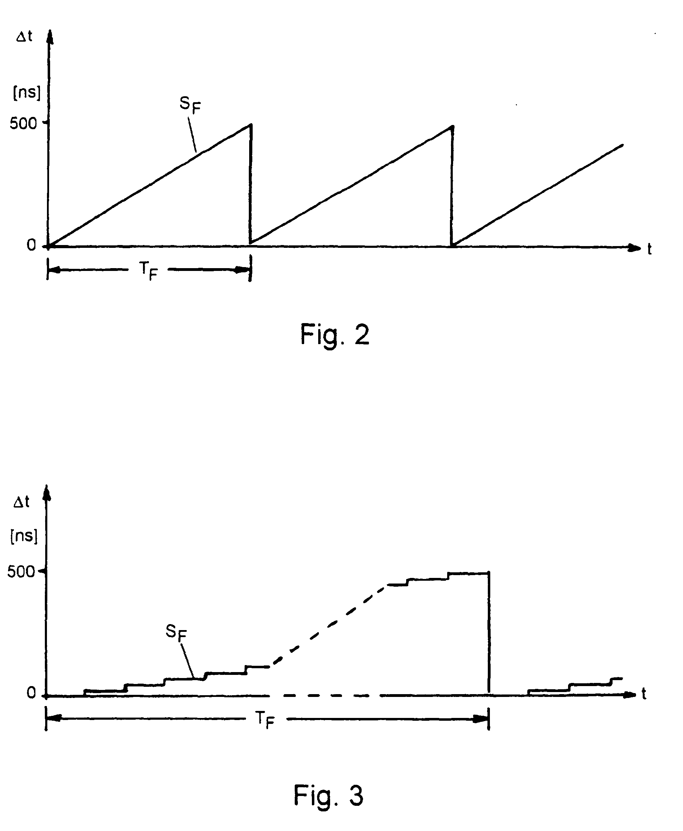

Damit die Abtastungen in der zuvor erläuterten Weise mit einer zunehmenden zeitlichen Verzögerung Δt gegenüber dem Beginn der Sendeperioden durchgeführt werden, werden die Abtastimpulse vom Abtastimpulsgenerator 22 unter Steuerung durch eine Verzögerungssteuerschaltung 24 erzeugt. Die Verzögerungssteuerschaltung 24 empfängt an einem Eingang 24a das Sendetaktsignal S_{T} und an einem Eingang 24b ein Funktionssignal S_{F}, das den gewünschten zeitlichen Verlauf der Verzögerung Δt bestimmt, die jeder der aufeinanderfolgenden Abtastimpulse I_{A} gegenüber den Beginn der Sendeperiode aufweisen soll, in der die Abtastung stattfindet. Im einfachsten Fall, wenn die Verzögerung Δt von Abtastimpuls zu Abtastimpuls linear zunehmen soll, kann das Funktionssignal S_{F} ein periodisches Sägezahnsignal sein, wie es in Fig. 2 dargestellt ist. Der Momentanwert des Sägezahnsignals S_{F} gibt die Verzögerungszeit Δt für den betreffenden Abtastzeitpunkt in dem zu erfassenden Bereich von beispielsweise 0 bis 500 ns an, und die Periodendauer T_{F} entspricht der Gesamtdauer der Sendeperioden, über die sich die vollständige Erfassung einer Periode des Empfangssignals S_{E} erstrecken soll. Wenn beispielsweise eine Abtastung nur alle 2 ms erfolgen soll, also bei dem angegebenen Beispiel in jeder 4000sten Sendeperiode, und die vollständige Erfassung einer Periode des Empfangssignals S_{E} durch 1000 Abtastungen erfolgen soll, hat das Funktionssignal S_{F} eine Periodendauer T_{F} von 2 s.

Die Verzögerungssteuerschaltung 24 gibt an ihrem Ausgang 24c ein Abtaststeuersignal S_{A} ab, das die gleiche Frequenz wie das dem Eingang 24a zugeführte Sendetaktsignal S_{T} hat, aber gegenüber diesem Sendetaktsignal S_{T} eine Verzögerung Δt aufweist, die den durch den Augenblickswert des Funktionssignals S_{F} bestimmten Wert hat. Dieses Abtaststeuersignal S_{A} wird einem steuereingang 22a des Abtastimpulsgenerators 22 zugeführt. Der Abtastimpulsgenerator 22 erzeugt daher in jeder Periode des Sendetaktsignals S_{T} an seinem Ausgang einen Abtastimpuls I_{A}, der gegenüber dem in der gleichen Sendeperiode vom Sendeimpulsgenerator 12 erzeugten Sendeimpuls I_{S} um diese Verzögerungszeit Δt nacheilt. Für jeden folgenden Abtastimpuls I_{A} vergrößert sich die Verzögerungszeit Δt entsprechend dem Anstieg des Funktionssignals S_{F}, bis das Ende der Periodendauer T_{F} erreicht ist. Dann springt die Verzögerungszeit Δt wieder auf den Anfangswert, und die Zunahme beginnt erneut. Die in jeder Periode des Sägezahnsignals erhaltenen Abtastwerte ergeben ein zeitgedehntes Abbild einer Periode des abgetasteten Bereichs des Empfangssignals S_{E}.

Ein besonderes Merkmal der Meßanordnung von Fig. 1 besteht darin, daß das Funktionssignal durch eine Rechenschaltung erzeugt wird, die bei dem dargestellten Ausführungsbeispiel durch einen Mikrocomputer 30 gebildet ist, in dem die den zeitlichen Verlauf des Funktionssignals bestimmende Abtastfunktion gespeichert ist. Der Mikrocomputer 30 gibt an einem Ausgang 30a ein digitales Signal ab, das den zeitlichen Verlauf des Funktionssignals repräsentiert und durch einen D/A-Wandler 26 in das analoge Funktionssignal S_{F} umgewandelt wird, das der Verzögerungssteuerschaltung 24 zugeführt wird. Die Abtastfunktion kann durch eine im Mikrocomputer 30 gespeicherte Rechenregel erzeugt werden, was beispielsweise bei der in Fig. 2 dargestellten linearen Sägezahnfunktion leicht möglich ist, oder sie kann bei kompliziertem Verlauf im Mikrocomputer 30 punktweise in Form einer Tabelle abgelegt sein.

Ein wesentlicher Vorteil der Erzeugung des Funktionssignals S_{F} durch den Mikrocomputer 30 besteht darin, daß auf einfache Weise überwacht werden kann, ob die dem Abtaststeuersignal S_{A} gegenüber dem Sendetaktsignal S_{T} erteilte Verzögerung Δt genau dem zu erfassenden Abtastzeitpunkt entspricht, und daß eine festgestellte Abweichung beseitigt werden kann. Zu diesem Zweck ist eine Zeitdifferenz-Meßschaltung 32 vorgesehen, die an einem Eingang das Sendetaktsignal S_{T} und an ihrem zweiten Eingang das Abtaststeuersignal S_{A} empfängt und an ihrem Ausgang ein Zeitdifferenzsignal S_{D} abgibt, das die Zeitdifferenz Δt zwischen den Signalen S_{A} und S_{T} angibt. Das analoge Zeitdifferenzsignal S_{D} wird in einem A/D-Wandler 34 in ein digitales Signal umgewandelt, das einem Eingang 30b des Mikrocomputers 30 zugeführt wird. Der Mikrocomputer 30 vergleicht die gemessene Zeitdifferenz Δt mit dem für den momentanen Abtastzeitpunkt festgelegten Sollwert und erteilt im Fall einer Abweichung dem am Ausgang 30a abgegebenen Funktionswert eine Korrektur, durch die die Abweichung beseitigt wird. Die für verschiedene Abtastzeitpunkte ermittelten Korrekturwerte können im Mikrocomputer 30 gespeichert und bei den nachfolgenden Abtastungen angewendet werden.

Die Korrektur kann auf verschiedene Weisen durchgeführt werden. Da sich die Fehlerursachen, wie Temperaturänderungen, spannungsschwankungen, Alterungen von Bauelementen usw. in der Regel nur langsam ändern, genügt meist eine Korrektur in größeren Zeitabständen, z. B. alle 5 Minuten. Bei einer linearen Funktion, wie bei der in Fig. 2 dargestellten Sägezahnfunktion, genügt die Erfassung und Korrektur des Fehlers an zwei Punkten, um die ganze Funktion zu korrigieren.

Ein weiterer Vorteil der Erzeugung des Funktionssignals S_{F} durch den Mikrocomputer 30 besteht darin, daß anstelle einer linearen Sägezahnfunktion, wie sie in Fig. 2 dargestellt ist, eine beliebige andere Funktion zur Abtastung des Empfangssignals S_{E} angewendet werden kann. Als Beispiel ist in Fig. 3 eine Treppenfunktion dargestellt, bei der die Stufen eine Länge von mehreren Abtastzeitintervallen haben. Der Deutlichkeit wegen ist in Fig. 3 nur der Anfangs- und der Endbereich einer Periode der Treppenfunktion in einem Zeitmaßstab dargestellt, der wesentlich größer als der Zeitmaßstab der Sägezahnfunktion in Fig. 2 ist. Durch die Anwendung dieser Treppenfunktion wird das Empfangssignal S_{E} in mehreren ausgewählten Sendeperioden nacheinander mit der gleichen Verzögerung Δt, also in einem der gleichen Meßentfernung entsprechenden Abtastzeitpunkt mehrfach abgetastet, bevor zum nächsten wert der Verzögerung Δt übergegangen wird. Die für die gleiche Verzögerung Δt erhaltenen Abtastwerte können vor der Auswertung integriert werden, wodurch die Reßgenauigkeit erhöht und der Einfluß von Störungen verringert wird. Ferner kann durch Anwendung unterschiedlicher Stufendauern und/oder Stufenhöhen die Abtastung der Empfangssignale an unterschiedliche Bedingungen angepaßt und optimiert werden. Die Anzahl der Abtastungen kann durch längere Stufen in bestimmten Entfernungsbereichen erhöht und durch kürzere Stufen in anderen Entfernungsbereichen verringert werden. Niedrigere Stufen haben zur Folge, daß die abgetasteten Entfernungspunkte näher beieinander liegen und somit die Auflösung in diesem Bereich erhöht wird, während durch höhere Stufen die Auflösung in anderen Bereichen verringert werden kann. Dadurch ergibt sich für den Anwender eine große Flexibilität zur Anpassung der Abtastung an unterschiedliche Anforderungen.

Vorzugsweise wird für die Erzeugung des Funktionssignals der gleiche Mikrocomputer verwendet, der auch die Auswertung des zeitgedehnten Empfangssignals vornimmt, das durch die stroboskopische Abtastung erhalten wird. Bei der in Fig. 1 dargestellten Meßanordnung wird deshalb das Ausgangssignal der Abtast-Halte-Schaltung 20 nach Verstärkung in einem Verstärker 36 durch einen A/D-Wandler 38 in ein digitales Signal umgewandelt, das einem Eingang 30c des Mikrocomputers 30 zugeführt wird. Der Mikrocomputer 30 ermittelt aus den digitalisierten Abtastwerten die Lage des Nutzechoimpulses im Empfangssignal und bestimmt dessen Laufzeit und daraus den zu messenden Abstand. Hierbei wird vorzugsweise das von der Zeitdifferenz-Meßschaltung 32 gelieferte Zeitdifferenzsignal S_{D} als Referenzsignal verwendet. Das Zeitdifferenzsignal S_{D} gibt ja für jeden Abtastzeitpunkt genau den Zeitabstand vom Sendezeitpunkt an, so daß der Mikrocomputer 30 für den Abtastzeitpunkt, in dem der Nutzechoimpuls erfaßt wird, den genauen Zeitabstand vom Sendezeitpunkt und damit die Laufzeit des Mikrowellenimpulses aus dem Zeitdifferenzsignal S_{D} ermitteln kann.

Ferner kann der Mikrocomputer 30 die Abtastung in Abhängigkeit von dem Ergebnis der Auswertung modifizieren. Beispielsweise kann er die Anzahl der Abtastungen in der Umgebung des Nutzechoimpulses erhöhen und in davon entfernten Bereichen verringern, oder er kann die Abtastung auf ein zeitliches Auswertefenster beschränken, in dem der Nutzechoimpuls liegt, und bei einer Änderung des zu messenden Abstandes dieses Auswertefenster der Lage des Nutzechoimpulses nachführen. Bei Anwendung der in Fig. 3 dargestellten Treppenfunktion kann er durch unterschiedliche Stufenlängen die Anzahl der aufeinanderfolgenden Abtastungen des gleichen Meßpunktes im Bereich des Nutzechoimpulses erhöhen und in anderen Bereichen verringern.

Wenn bei dem beschriebenen Ausführungsbeispiel in jeder Sendeperiode ein Abtastwert gebildet wird, folgen die Abtastwerte mit der Frequenz des Sendetaktsignals S_{T} von 2 MHz, also im Abstand von 0,5 *µ*s aufeinander. Die üblicherweise verwendeten Mikrocomputer können jedoch die Abtastwerte nur mit wesentlich geringerer Folgefrequenz aufnehmen, beispielsweise mit 500 Hz, also im Zeitabstand von 2 ms. Dies ist ein wesentlicher Grund dafür, daß die Abtastungen nicht in jeder Sendeperiode vorgenommen werden, sondern in jeder n-ten Sendeperiode, beispielsweise in jeder 4000sten Sendeperiode. Da jedoch der Sendetaktgeber 10 das Sendetaktsignal S_{T} weiterhin mit der Frequenz von 2 MHz liefert und demzufolge auch die Verzögerungssteuerschaltung 24 das Abtaststeuersignal S_{A} mit der gleichen Frequenz abgibt, kann die Zeitdifferenz-Meßschaltung 32 dir Zeitdifferenz Δt zwischen diesen Signalen mit der gleichen Frequenz messen, also beispielsweise 4000 Zeitdifferenzmessungen in dem Abtastzeitintervall zwischen zwei Abtastungen vornehmen. Bei Anwendung der in Fig. 3 dargestellten Treppenkurve ändert sich die Zeitdifferenz Δt in diesem Zeitintervall nicht, so daß 4000mal der gleiche Meßwert erhalten wird. Vorzugsweise werden daher die in dem Abtastzeitintervall erhaltenen Meßwerte für die Zeitdifferenz Δt in der Zeitdifferenz-Meßschaltung 32 integriert, und der Integrationswert wird als Zeitdifferenzsignal S_{D} ausgegeben. Dadurch wird für die Zeitdifferenzmessung die Meßgenauigkeit erhöht, der Einfluß von Störungen verringert und die Signalamplitude vergrößert.

Die gleiche Integration kann jedoch auch bei Anwendung des Sägezahnsignals von Fig. 2 angewendet werden. Zwar ändert sich in diesem Fall die Zeitdifferenz Δt in dem Abtastzeitintervall stetig, doch ist diese Änderung einerseits sehr gering, denn sie beträgt nur eine Abtaststufe, und andrerseits erfolgt die Änderung linear, so daß durch die Integration ein Mittelwert erhalten wird, der genau in der Mitte zwischen der Zeitdifferenz Δt des vorhergehenden Abtastzeitpunktes und der Zeitdifferenz Δt des folgenden Abtastzeitpunktes liegt. Dieser Mittelwert kann daher im Mikrocomputer 30 in gleicher Weise wie die genaue Zeitdifferenz Δt eines Abtastzeitpunktes zur Korrektur der Zeitdifferenz und als Referenz bei der Ermittlung der Impulslaufzeit verwendet werden. Entsprechendes gilt für jede andere beliebige Abtastfunktion; da diese im Mikrocomputer bekannt ist, kann dieser den Zusammenhang zwischen dem Integrationswert und der zu messenden Zeitdifferenz berechnen und bei der Korrektur der Zeitdifferenz sowie bei der Ermittlung der Impulslaufzeit berücksichtigen.

Für den Fall, daß die Abtastungen nicht in jeder Sendeperiode, sondern nur in jeder n-ten Sendeperiode vorgenommen werden, ist in Fig. 1 noch eine weitere Maßnahme dargestellt, die aufgrund der Erzeugung der Abtastfunktion durch den Mikrocomputer 30 möglich ist und den Zweck einer Leistungseinsparung hat. Wenn bei dem zuvor angegebenen Beispiel in jeder Sendeperiode ein Sendeimpuls erzeugt wird, wird nur jeder 4000ste Sendeimpuls zur Auswertung herangezogen, während die übrigen Sendeimpulse ungenutzt bleiben. Der größte Teil der Leistung, die die Meßanordnung aufnimmt, wird jedoch für die Erzeugung der Sendeimpulse verbraucht. Bei der Meßanordnung von Fig. 1 gibt daher der Mikrocomputer 30 an seinem Ausgang 30d ein Sperrsignal ab, das einem Steuereingang 12c des Sendeimpulsgenerators 12 und einem Steuereingang 22c des Abtastimpulsgenerators 22 zugeführt wird und so beschaffen ist, daß es die Erzeugung von Sendeimpulsen Is und von Abtastimpulsen I_{A} in allen Sendeperioden verhindert, in denen keine nutzbare Abtastung erfolgt. Auf diese Weise wird eine beträchtliche Leistungseinsparung erzielt, ohne daß die Funktion der Meßanordnung beeinträchtigt wird. Die Leistungseinsparung ist insbesondere bei Meßanordnungen mit Zweidrahtversorgung wichtig, bei denen die Energieversorgung der Meßanordnung von einer Zentrale über eine Zweidrahtleitung erfolgt, über die in der Gegenrichtung das Meßsignal in Form eines zwischen 4 und 20 mA veränderlichen Stroms übertragen wird. Bei solchen Meßanordungen ist der Strom, der für die Energieversorgung der Meßanordnung zur Verfügung steht, auf 4 mA beschränkt, so daß jede Möglichkeit einer Leistungseinsparung ausgenutzt werden muß.

Verschiedene Abänderungen der Meßanordnung von Fig. 1 sind für den Fachmann offensichtlich. Insbesondere kann anstelle des Mikrocomputers 30 auch jede andere Rechenschaltung verwendet werden, die in der Lage ist, das Funktionssignal S_{F} auf Grund einer Abtastfunktion zu erzeugen, die den zeitlichen Verlauf des Funktionssignals bestimmt. Dies kann beispielsweise auch eine analoge Rechenschaltung sein.

## Patentansprüche

1. Verfahren zur Entfernungsmessung mit elektromagnetischen Wellen nach dem Impulslaufzeitverfahren, bei welchem in periodischen Sendezeitpunkten jeweils ein kurzer elektromagnetischer Sendeimpuls (I_{S}) ausgesendet wird und die in ausgewählten Sendeperioden nach den Sendezeitpunkten erhaltenen Empfangssignale (S_{E}) abgetastet werden, indem in jeder dieser Sendeperioden in einem Abtastzeitpunkt, der gegenüber dem Sendezeitpunkt eine durch eine Abtastfunktion bestimmte Verzögerung (Δt) aufweist, jeweils in einem Abtastzeitintervall ein Abtastwert entnommen wird, wobei die Abtastzeitpunkte gegenüber den Sendezeitpunkten unterschiedliche Verzögerungen (Δt) aufweisen, und bei welchem die Auswertung der Abtastwerte zur Bestimmung der zu messenden Entfernung in einer Rechenschaltung (30) erfolgt und die Abtastfunktion durch die Rechenschaltung (30) in Abhängigkeit von der Auswertung der Abtastwerte erzeugt wird.

2. Verfahren nach Anspruch 1, bei welchem die die Auswertung der Abtastwerte und die Erzeugung der Abtastfunktion durch einen Mikrocomputer (30) erfolgt.

3. Verfahren nach Anspruch 2, bei welchem die Abtastfunktion durch eine im Mikrocomputer (30) gespeicherte Rechenregel erzeugt wird.

4. Verfahren nach Anspruch 2, bei welchem die Abtastfunktion im Mikrocomputer (30) in Form einer Tabelle abgelegt ist.

5. Verfahren nach Anspruch 1 bis 4, bei welchem die Abtastfunktion eine lineare Sägezahnfunktion ist.

6. Verfahren nach Anspruch 1 bis 4, bei welchem die Abtastfunktion eine Treppenfunktion ist, deren Stufen eine Länge von mehreren Abtastzeitintervallen haben; so dass die Abtastzeitpunkte in mehreren aufeinanderfolgenden Abtastzeitintervallen die gleiche Verzögerung (Δt) gegenüber den Sendezeitpunkten haben.

7. Verfahren nach Anspruch 6, bei welchem die während der Dauer einer Stufe der Treppenfunktion erhaltenen Abtastwerte integriert werden.

8. Verfahren nach Anspruch 1 bis 7, bei welchem die Verzögerung (Δt), die der Abtastzeitpunkt gegenüber dem Sendezeitpunkt in der gleichen Sendeperiode aufweist, gemessen wird, der Messwert in der Rechensehaltung (30) mit dem Sollwert verglichen wird und im Falle einer Abweichung die Abtastfunktion zur Beseitigung der Abweichung korrigiert wird.

9. Verfahren nach Anspruch 8, bei welchem die zur Korrektur der Abtastfunktion ermittelten Korrekturwerte in der Rechensehaltung (30) gespeichert und bei nachfolgenden Abtastungen angewendet werden.

10. Verfahren nach Anspruch 8 oder 9, bei welchem der Messwert der Verzögerung (Δt) in der Rechenschaltung (30) als Referenzwert für die Bestimmung der zu messenden Entfernung verwendet wird.

11. Verfahren nach Anspruch 8, bei welchem jedes Abtastzeitintervall die Dauer von mehreren Sendeperioden hat, so dass eine Abtastung jeweils nur in einer von mehreren aufeinanderfolgenden Sendeperioden erfolgt, und bei welchem die Messung der Verzögerung (Δt) auch in Sendeperioden erfolgt, in denen keine Abtastung stattfindet, und die zwischen zwei aufeinanderfolgenden Abtastungen erhaltenen Messwerte der Verzögerung (Δt) integriert werden.

12. Verfahren nach Anspruch 11, bei welchem die Rechenschaltung die Aussendung von Sendeimpulsen (I_{S}) und die Abtastung der Empfangssignale (S_{E}) nur in Sendeperioden zulässt, in denen eine Abtastung stattfindet.

13. Anordnung zur Entfernungsmessung mit elektromagnetischen Wellen nach dem Impulslaufzeitverfahren, mit einer Sende-Empfangs-Anordung zur Aussendung von kurzen elektromagnetischen Sendeimpulsen (I_{S}) in periodischen Sendezeitpunkten und zur Lieferung von Empfangssignalen (S_{E}), die die reflektierten Echoimpulse enthalten, einem Sendeimpulsgenerator zur Erzeugung der Sendeimpulse (I_{S}), einem Sendetaktgeber, der ein periodisches Sendetaktsignal (S_{T}) erzeugt, das dem Sendeimpulsgenerator zugeführt wird und die Sendezeitpunkte bestimmt, einer Abtastschaltung, in der die Empfangssignale (S_{E}) in aufeinanderfolgenden Sendeperioden unter Steuerung durch Abtastimpulse (I_{A}) abgetastet werden, einem Abtastimpulsgenerator (22), der in allen oder in ausgewählten Sendeperioden jeweils einen Abtastimpuls in einem Abtastzeitpunkt erzeugt, der eine durch eine Abtastfunktion bestimmte Verzögerung (At) gegenüber dem Sendezeitpunkt aufweist, einer Verzögerungssteuerschaltung (24), die das Sendetaktsignal (S_{T}) und ein die Abtastfunktion repräsentierendes Funktionssignal (S_{F}) empfängt und zum Abtastimpulsgenerator (22) ein die Abtastzeitpunkte bestimmendes Abtaststeuersignal (S_{A}) liefert, und mit einer Rechenschaltung (30), die die Abtastwerte zur Bestimmung der zu messenden Entfernung auswertet und das Funktionssignal (S_{F}) auf Grund der in der Rechenschaltung (30) festgelegten Abtastfunktion in Abhängigkeit von der Auswertung der Abtastwerte erzeugt.

14. Anordnung nach Anspruch 13, bei welcher die Rechenschaltung (30) ein Mikrocomputer ist

15. Anordnung nach Anspruch 13, mit einer Zeitdifferenz-Messschaltung (32), die an ihrem ersten Eingang das Sendetaktsignal (S_{T}) und an ihrem zweiten Eingang das Abtaststeuersignal (S_{A}) empfängt und an ihrem Ausgang ein die Zeitdifferenz zwischen diesen beiden Signalen repräsentierendes Zeitdifferenzsignal (S_{D}) abgibt, das der Rechenschaltung (30) zugeführt wird.

16. Anordnung nach Anspruch 15, bei welcher in der Rechenschaltung die durch das Zeitdifferenzsignal (S_{D}) repräsentierte Zeitdifferenz mit dem Sollwert verglichen und im Falle einer Abweichung das Funktionssignal (S_{F}) zur Beseitigung der Abweichung modifiziert wird.

17. Anordnung nach Anspruch 15, bei welcher in der Rechenschaltung die durch das Zeitdifferenzsignal (S_{D}) repräsentierte Zeitdifferenz als Referenzwert für die Bestimmung der zu messenden Entfernung verwendet wird.

18. Anordnung nach Anspruch 13, welche ferner eine Antenne zur Ausstrahlung der elektromagnetischen Sendeimpulse (l_{S}) und zum Empfang der an einem Objekt reflektierten Echoimpulse enthält.

19. Anordnung nach Anspruch 18 zur Messung des Füllstands in einem Behälter, bei welcher die Antenne oberhalb des höchsten vorkommenden Füllstands so am Behälter angebracht ist, dass sie die elektromagnetischen Sendeimpulse (l_{S}) zur Füllgutoberfläche hin aussendet und die an der Füllgutoberfläche reflektierten Echoimpulse empfängt

20. Anordnung nach Anspruch 13 zur Messung des Füllstands in einem Behälter, mit einer Wellenleitung, die sich von einer Einkoppelstelle, die oberhalb des höchsten vorkommenden Füllstands liegt, nach unten erstreckt und in das Füllgut eintaucht, und über die die elektromagnetischen Sendeimpulse (I_{S}) zur Füllgutoberfläche übertragen werden und die an der Füllgutoberfläche reflektierten Echoimpulse zur Einkoppelstelle zurück übertragen werden.

## Claims

1. Method for distance measurement with electromagnetic waves using the pulse time of flight principle, wherein a short electromagnetic transmission pulse (I_{S}) is in each case emitted at periodic transmission instants and the received signals (S_{E}) obtained in selected transmission periods after the transmission instants are sampled by taking, in each of these transmission periods, a sample at a sampling instant in each case in a sampling time interval, the sampling instant having a delay (Δt) dictated by a sampling function relative to the transmission instant, with the sampling instants exhibiting differing delays (Δt) relative to the transmission instants, and wherein the evaluation of the samples for determining the distance to be measured is done in a computing circuit (30) and the sampling function is generated by the computing circuit (30) in dependence on the evaluation of the samples.

2. Method according to Claim 1, wherein the evaluation of the samples and the generation of the sampling function are done by a microcomputer (30).

3. Method according to Claim 2, wherein the sampling function is generated by an algorithm stored in the microcomputer (30).

4. Method according to Claim 2, wherein the sampling function is stored in the microcomputer (30) in the form of a table.

5. Method according to Claim 1 to 4, wherein the sampling function is a linear sawtooth function.

6. Method according to Claim 1 to 4, wherein the sampling function is a staircase function, the steps of which have a length of a plurality of sampling time intervals, so that the sampling instants in a plurality of consecutive sampling time intervals have the same delay (Δt) relative to the transmission instants.

7. Method according to Claim 6, wherein the samples obtained over the duration of a step of the staircase function are integrated.

8. Method according to Claim 1 to 7, wherein the delay (Δt) exhibited by the sampling instant relative to the transmission instant in the same transmission period is measured, the measured value is compared with the desired value in the computing circuit (30) and in the event of a deviation the sampling function is corrected to eliminate the deviation.

9. Method according to Claim 8, wherein the correction values established for correcting the sampling function are stored in the computing circuit (30) and used in subsequent samplings.

10. Method according to Claim 8 or 9, wherein the measured value of the delay (Δt) is used in the computing circuit (30) as a reference value for determining the distance to be measured.

11. Method according to Claim 8, wherein each sampling time interval has the duration of a plurality of transmission periods, so that sampling takes place in each case only in one of a plurality of consecutive transmission periods, and wherein the measurement of the delay (Δt) is also done in transmission periods in which no sampling occurs, and the measured values of the delay (Δt) obtained between two consecutive samplings are integrated.

12. Method according to Claim 11, wherein the computing circuit permits the emission of transmission pulses (I_{S}) and the sampling of the received signals (S_{E}) only in transmission periods in which sampling occurs.

13. Arrangement for distance measurement with electromagnetic waves using the pulse time of flight principle, comprising a transmit-receive arrangement for emitting short electromagnetic transmission pulses (I_{S}) at periodic transmission instants and for delivering received signals (S_{E}) containing the reflected echo pulses, a transmission pulse generator for generating the transmission pulses(Is), a transmission clock generator generating a periodic transmission clock signal (S_{T}) which is supplied to the transmission pulse generator and dictates the transmission instants, a sampling circuit in which the received signals (S_{E}) are sampled in consecutive transmission periods with control by sampling pulses (I_{A}), a sampling pulse generator (22) generating in each case a sampling pulse at a sampling instant in all or selected transmission periods, the sampling instant having a delay (Δt) dictated by a sampling function relative to the transmission instant, a delay control circuit (24) receiving the transmission clock signal (S_{T}) and a function signal (S_{F}) which represents the sampling function and delivering to the sampling pulse generator (22) a sampling control signal (S_{A}) dictating the sampling instants, and a computing circuit (30) evaluating the samples for determining the distance to be measured and generating the function signal (S_{F}) on the basis of the sampling function laid down in the computing circuit (30), in dependence on the evaluation of the samples.

14. Arrangement according to Claim 13, wherein the computing circuit (30) is a microcomputer.

15. Arrangement according to Claim 13, including a time difference measuring circuit (32) which at its first input receives the transmission clock signal (S_{T}) and at its second input receives the sampling control signal (S_{A}) and which at its output delivers a time difference signal (S_{D}) representing the time difference between these two signals, the time difference signal being supplied to the computing circuit (30).

16. Arrangement according to Claim 15, wherein in the computing circuit the time difference represented by the time difference signal (S_{D}) is compared with the desired value and in the event of a deviation the function signal (S_{F}) is modified to eliminate the deviation.

17. Arrangement according to Claim 15, wherein in the computing circuit the time difference represented by the time difference signal (S_{D}) is used as a reference value for determining the distance to be measured.

18. Arrangement according to Claim 13, which further includes an antenna for emitting the electromagnetic transmission pulses (I_{S}) and for receiving the echo pulses reflected at an object.

19. Arrangement according to Claim 18 for measuring the filling level in a container, wherein the antenna is attached to the container above the highest-occurring filling level in such a way that it emits the electromagnetic transmission pulses (I_{S}) towards the surface of the filling material and receives the echo pulses reflected at the surface of the filling material.

20. Arrangement according to Claim 13 for measuring the filling level in a container, with a wave line which extends downwards from a launching point lying above the highest-occurring filling level and dips into the filling material, and via which the electromagnetic transmission pulses (I_{S}) are transmitted to the surface of the filling material and the echo pulses reflected at the surface of the filling material are transmitted back to the launching point.

## Revendications

1. Procédure pour mesurer la distance au moyen d'ondes électromagnétiques selon le procédé du temps de transit d'impulsions dans lequel on envoie à chaque fois une brève impulsion d'envoi (ls) électromagnétique selon des instants d'envoi périodiques et lesquelles ondes sont balayées selon des périodes d'envoi choisies pour trouver des signaux de réception (S_{E}) obtenus après les instants d'envoi , en prélevant une valeur de balayage dans un intervalle de temps de balayage, lequel instant de balayage présente un retard (Δt) par rapport à l'instant d'envoi, lequel retard est déterminé au moyen d'une fonction de balayage ; les instants de balayage présentant différents retards (Δt) par rapport aux instants d'envoi, et dans lequel procédé l'évaluation des valeurs de balayage est effectuée dans un circuit de calcul (30) pour déterminer la distance à mesurer, et dans lequel procédé, la fonction de balayage est générée par le circuit de calcul (30) en fonction de l'évaluation des valeurs de balayage.

2. Procédé selon la revendication 1, dans lequel l'évaluation des valeurs de balayage et la production de la fonction de balayage sont effectuées par un micro-ordinateur (30).

3. Procédé selon la revendication 2, dans lequel la fonction de balayage est générée par une règle de calcul stockée dans le micro-ordinateur (30).

4. Procédé selon la revendication 2, dans lequel la fonction de balayage est stockée dans le micro-ordinateur (30) sous la forme d'un tableau.

5. Procédé selon la revendication 1 à 4, dans lequel la fonction de balayage est une fonction en dent de scie linéaire.

6. Procédé selon la revendication 1 à 4, dans lequel la fonction de balayage est une fonction en escalier , dont les gradins présentent une longueur de plusieurs intervalles de temps de balayage, de manière à ce que les instants de balayage présentent dans plusieurs temps de balayage successifs le même retard (Δt) par rapport aux instants d'envoi.

7. Procédé selon la revendication 6, dans lequel les valeurs de balayage obtenues pendant la durée d'un gradin de la fonction en escalier sont intégrées.

8. Procédé selon les revendications 1 à 7, dans lequel on mesure le retard (Δt) par rapport aux instants d'envoi dans la même période d'envoi ; la valeur de mesure étant comparée dans le circuit de calcul (30) avec la valeur de consigne et dans le cas d'un écart, la fonction de balayage est corrigée pour enlever ledit écart.

9. Procédé selon la revendication 8, dans lequel les valeurs de correction déterminées pour corriger la fonction de balayage sont stockées dans le circuit de calcul (30), et dans lequel procédé lesdites valeurs sont utilisées pour les balayages suivants.

10. Procédé selon les revendications 8 ou 9, dans lequel procédé on utilise la valeur de mesure du retard (Δt) dans le circuit de calcul (30) en tant que valeur de référence pour déterminer la distance à mesurer.

11. Procédé selon la revendication 8, dans lequel chaque intervalle de balayage présente la durée de plusieurs périodes d'envoi, de manière à effectuer, à chaque fois, un balayage uniquement dans une parmi plusieurs périodes d'envoi successives, et dans lequel procédé la mesure du retard (Δt) est effectuée également à des périodes d'envoi pendant lesquelles aucun balayage n'a lieu ; les valeurs de mesure de retard (Δt) obtenues entre deux balayages successifs étant intégrées.

12. Procédé selon la revendication 11, dans lequel le circuit de calcul permet l'envoi d'impulsions d'envoi (ls) et le balayage des signaux de réception (Se) uniquement à des périodes d'envoi dans lesquelles un balayage a lieu.

13. Dispositif pour mesurer la distance avec des ondes électromagnétiques selon le procédé du temps de transit d'impulsions , avec un dispositif envoi - réception destiné à émettre de brèves impulsions d'envoi électromagnétiques (I_{S}) à des instants d'envoi périodiques et pour livrer des signaux de réception (S_{E}) comportant les impulsions écho réfléchies, avec un générateur d'impulsion d'envoi pour générer les impulsions d'envoi (I_{S}), avec une horloge d'envoi générant un signal d'horloge d'envoi (S_{T}), lequel signal est conduit vers un générateur d'impulsion d'envoi et laquelle horloge d'envoi détermine les instants d'envoi, un circuit de balayage dans lequel les signaux de réception (S_{E}) sont balayés selon des périodes d'envoi successives en étant commandé par des impulsions de balayage (la), un générateur d'impulsions de balayage (22) générant dans toutes les périodes d'envoi ou à des périodes d'envoi choisies, à chaque fois, une impulsion de balayage à un instant de balayage, lequel instant de balayage présente un retard (Δt) par rapport à l'instant d'envoi, lequel retard est déterminé par la fonction de balayage, un circuit de commande de retard (24) qui reçoit le signal d'horloge d'envoi (S_{T}) et un signal fonctionnel (S_{F}) représentant la fonction de balayage, et lequel circuit fournit au générateur d'impulsion de balayage (22) un signal de commande de balayage (S_{A}) déterminant les instants de balayage, et avec un circuit de calcul (30) qui évalue les valeurs de balayage pour déterminer la distance à mesurer et qui génère le signal fonctionnel (S_{F}) sur la base de la fonction de balayage déterminée dans le circuit de calcul (30) en fonction de l'évaluation des valeurs de balayage.

14. Dispositif selon la revendication 13, dans lequel le circuit de calcul (30) est un micro-ordinateur.

15. Dispositif selon la revendication 13, avec un circuit de mesure (32) de la différence de temps, lequel circuit reçoit à sa première entrée le signal d'horloge d'envoi (S_{T}) et à sa deuxième entrée, le signal de commande de balayage (S_{A}) et lequel circuit émet à sa sortie un signal de différence de temps (Sp) représentant la différence de temps entre ces deux signaux, lequel signal est conduit vers le circuit de calcul (30).

16. Dispositif selon la revendication 15, dans lequel on compare dans le circuit de calcul, la différence de temps représentée par le signal de différence de temps (Sp) avec la valeur de consigne et dans lequel dispositif on modifie dans le cas d'un écart, le signal fonctionnel (S_{F}) pour enlever l'écart.

17. Dispositif selon la revendication 15, dans lequel on utilise dans le circuit de calcul, la différence de temps représentée par le signal de différence de temps (Sp) en tant que valeur de référence pour déterminer la distance à mesurer.

18. Dispositif selon la revendication 13, qui comporte, en outre, une antenne pour émettre des impulsions d'envoi (I_{S}) électromagnétiques et pour recevoir les impulsions écho réfléchies sur l'objet.

19. Dispositif selon la revendication 18, pour mesurer le niveau de remplissage dans un récipient, dans lequel dispositif on a fixé sur le récipient l'antenne au dessus du niveau de remplissage le plus haut possible, de manière à ce que l'antenne envoie les impulsions d'envoi (I_{S}) électromagnétiques vers la surface de la matière de remplissage et reçoive les impulsions écho réfléchies sur la surface de la matière de remplissage.

20. Dispositif selon la revendication 13, pour mesurer le niveau de remplissage dans un récipient au moyen d'un guidage d'ondes qui s'étend vers le bas, à partir de l'endroit de couplage se trouvant au dessus du niveau de remplissage situé le plus haut possible, et lequel guidage d'ondes plonge dans la matière de remplissage et via lequel guidage d'ondes les impulsions d'envoi électromagnétiques (ls) sont transmises vers la surface de la matière de remplissage, et dans lequel dispositif, les impulsions d'écho réfléchies sur la surface de la matière de remplissage sont retransmis vers l'endroit de couplage.
